# EUROPEAN PATENT SPECIFICATION

(11) **EP 2 881 288 B1**
(45) Date of publication and mention of the grant of the patent: **06.09.2017**
(21) Application number: 12882497.6
(22) Date of filing: 22.08.2012
(51) Int. Cl.: B60R 25/06, F16H 59/02, F16H 61/22

(54) **KEYLESS ANTI-THEFT DEVICE**
SCHLÜSSELLOSE DIEBSTAHLSICHERE VORRICHTUNG
DISPOSITIF ANTIVOL SANS CLÉ

(30) Priority: 30.07.2012 RU 2012132530
(43) Date of publication of application: 10.06.2015
(73) Proprietor: Sidorov, Aleksandr Konstantinovich, Moscow 115522 (RU)
(72) Inventor: Sidorov, Aleksandr Konstantinovich, Moscow 115522 (RU)
(74) Representative: Lapienis, Juozas
(86) International application number: PCT/RU2012/000691
(87) International publication number: WO 2014/021732

(56) References cited:
- EP-A1- 0 519 205
- EP-A1- 0 519 205
- JP-A- H04 119 251
- JP-A- H04 119 251
- JP-A- 2009 096 311
- JP-A- 2009 096 311
- RU-U1- 108 370
- RU-U1- 108 370

## Description

### Background of the invention

The invention relates to transport machine building, in particular to anti-theft devices for locking the transmission of a vehicle and may be applied for goods and passenger vehicles.

### Prior art

From the data generally available to the priority date of the technical solution as claimed, it is known the following device applied for the same purpose: a keyless anti-theft device, comprising a security part, a gearbox lever locking means and a drive mechanism of the locking means, wherein the security part is made in the form of a set of code and false keys with rods mounted by means of seals in the gearbox and connected by means of three-dimensional levers to drive mechanism weights of the locking means, which is in the form of a rocker arm vertically pivotable about the axis, wherein the locking end of the rocker arm is provided with a limiter for limiting the travel of a gearbox lever adapted for interacting with a stop piece rigidly connected to the gearbox lever, wherein the device is provided with a limiter for limiting the rocker arm locking end descending travel (see the Russian Federation patent RU 108370, IPC B60R25/04, 2011).

Being the closest by its subject matter and objects to the device as claimed, this technical solution, thus, has been chosen as a prior art.

The prior art drawbacks lie in its insufficient security due to the rigid contact between the security part elements and the drive mechanism of the locking means enabling acoustic code cracking and having a complicated structure.

### Summary of the invention

The technical effect of the device in use lies in security increase obtained by preventing code cracking due to a flexible connection provided between the security part and the locking means drive mechanism, and due to simplifying the whole structure.

Both general and particular essential features characterizing the causal relationship between the technical solution and the specified technical effect are set forth below.

A keyless anti-theft device comprises a security part, a gearbox lever locking means and a drive mechanism of the locking means, wherein the security part is made in the form of a set of code and false keys with rods mounted by means of seals in the gearbox and connected by means of three-dimensional levers to drive mechanism weights of the locking means which is in the form of a rocker arm vertically pivotable about the axis. A locking end of the rocker arm is provided with a limiter for limiting the travel of a gearbox lever adapted for interacting with a stop piece rigidly connected to the gearbox lever. The device is provided with a limiter for limiting the rocker arm locking end descending travel. Said three-dimensional levers are connected to the weights through flexible ties, wherein all the weights are freely arranged in open-top baskets rigidly connected to said rocker arm and equipped with tongues preventing the weights from falling out the baskets, the baskets being arranged longitudinally on either side of the rocker arm mounting axis, thus, forming at least one horizontal row. The rocker arm locking part has baskets rigidly attached thereto, wherein the tightening weights of the baskets are connected to the false keys, and the other, i.e. the ballast, part of the rocker arm has baskets rigidly attached thereto being able to receive at least three counterweights connected to the code keys. The ratio of the total weights of each rocker arm locking and ballast parts is obtained in order to allow the rocker arm pivoting towards the ballast part when loaded with a set of counterweights; and pivoting towards the locking part when loaded with at least a tightening weight when the ballast part baskets completely loaded or the rocker arm locking and ballast parts not loaded at all. The travel of each of said code key rods and the travel of associated counterweight is equal to the value B, thus allowing the latters stopping at the bottom of the basket of the rocker arm ballast part in the locked position of the gearbox lever. The value B is inherent to all the false key tightening weights, whereby the distance between the bottom of the false key baskets, more remote from the arm rocker axis, within the rocker arm locking part and the weights being in contact is equal to B + K₂, the value K₂ being less than that of travel K₁ of the rocker arm locking means till the gearbox lever coming out of the stop piece interaction, and the value B is not less than value K₁. Each of the rods is equipped with a rotation limiter and axial movement limiters which limit axial up and down movement, and with an upper position stop performed as a hinge pedestal, wherein the security part is equipped with a means for balancing the total weight of each of the moveable elements, wherein in the gearbox upper part a vane-type fixer is arranged to fix the rocker arm open position, and said weights i.e. counterweights and tightening weights are made of magnetically resistant materials, the lever and rods being passed through a support plate. Said open position fixer of the gearbox lever locking means is performed as a pivot lever having a vane arranged on its free end and engaged in the operation position with the rocker arm and having a handle on the other end, and in its middle part said lever has a limiter for limiting its vertical travel. Said vertical travel limiting means of the lever is performed in the form of two sleeves spaced apart or a sleeve with a height equal to the distance between the gearbox upper part and the support plate. Said rocker arm is L-shaped and shifted to the gearbox side wall. Each rod hinge pedestal has a height providing its fixing in the upper position. Each rod rotation limiter is performed as two plates attached to the gearbox, surrounding from both sides a rectangular cross-section insert integral with the rod. The means for balancing the total weight of each of the security part moveable elements is performed as additional weights attached to the rod, the weight of which provides equal total weights of the security part movable elements, and simultaneously the additional weights act as said rod axial movement limiters. The means for balancing the total weight of each of the security part moveable elements is performed by changing each three-dimensional lever material consumption. The means for balancing the total weight of each of the security part moveable elements is performed by using different specific weight materials for each three-dimensional lever. The means for balancing the total weight of each of the security part moveable elements is performed by material removal, such as through or blind openings in each three-dimensional lever whose weight exceeds the reference one. Said limiter for limiting the rocker arm locking end descending travel is performed as a pedestal fixed to the gearbox and adapted for interacting with the rocker arm ballast end.

### Drawings

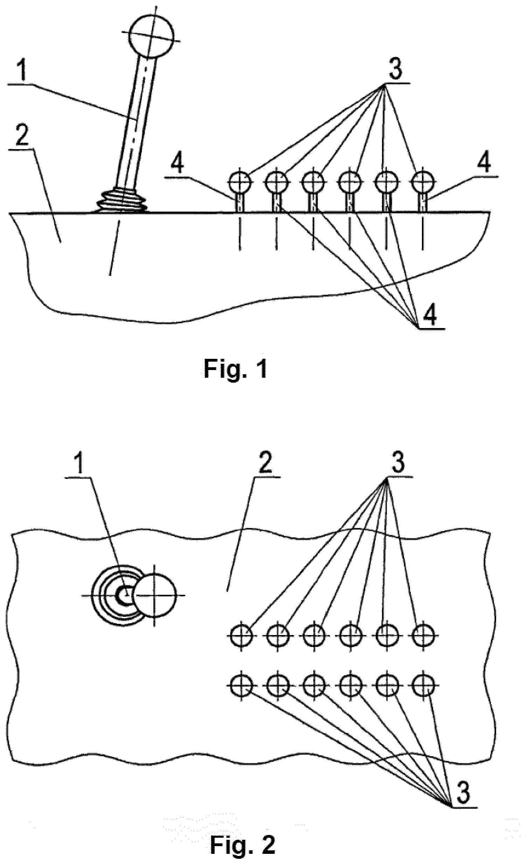

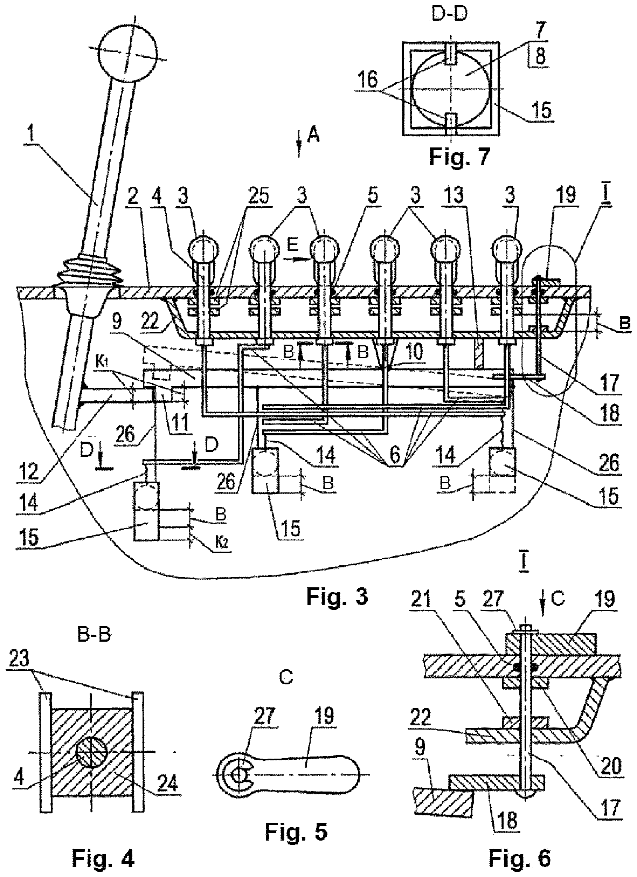

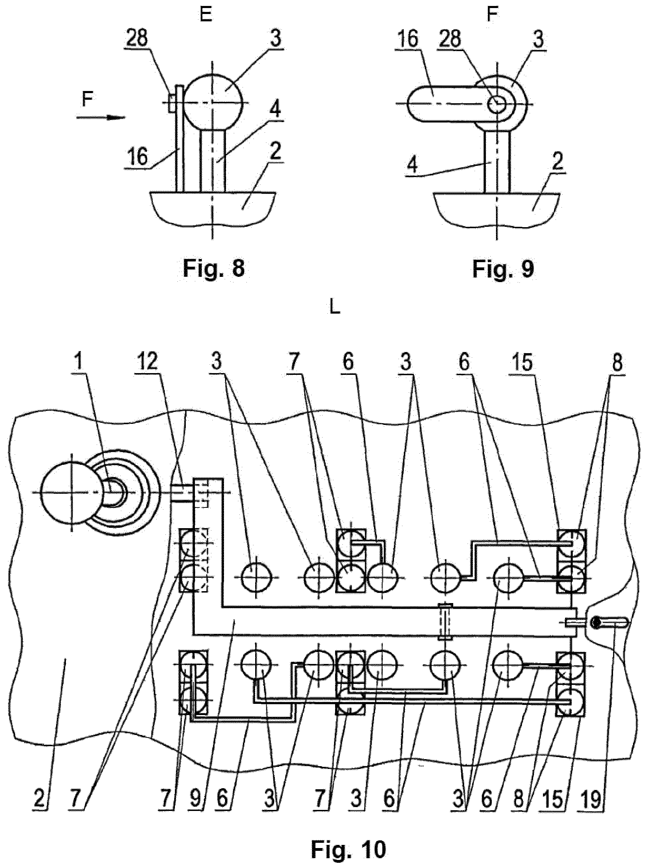

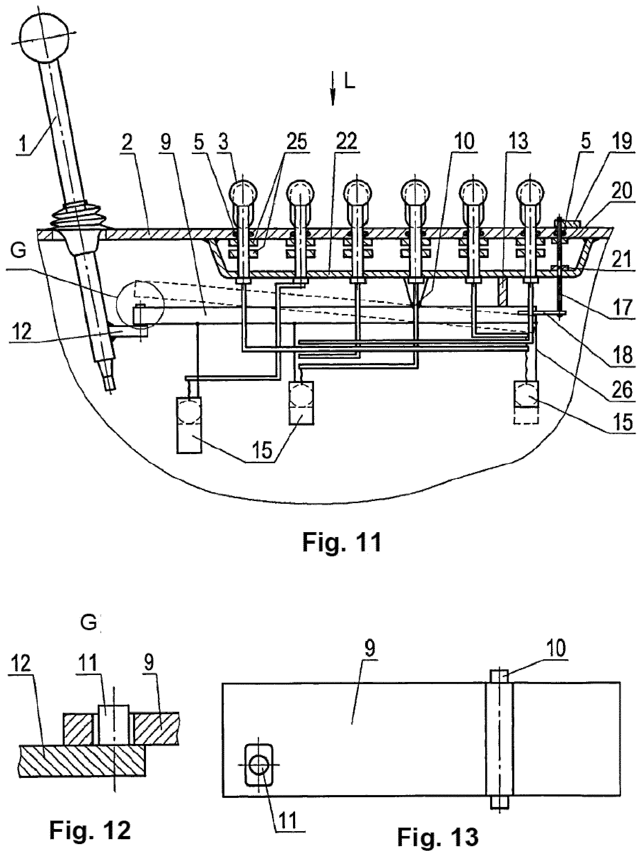

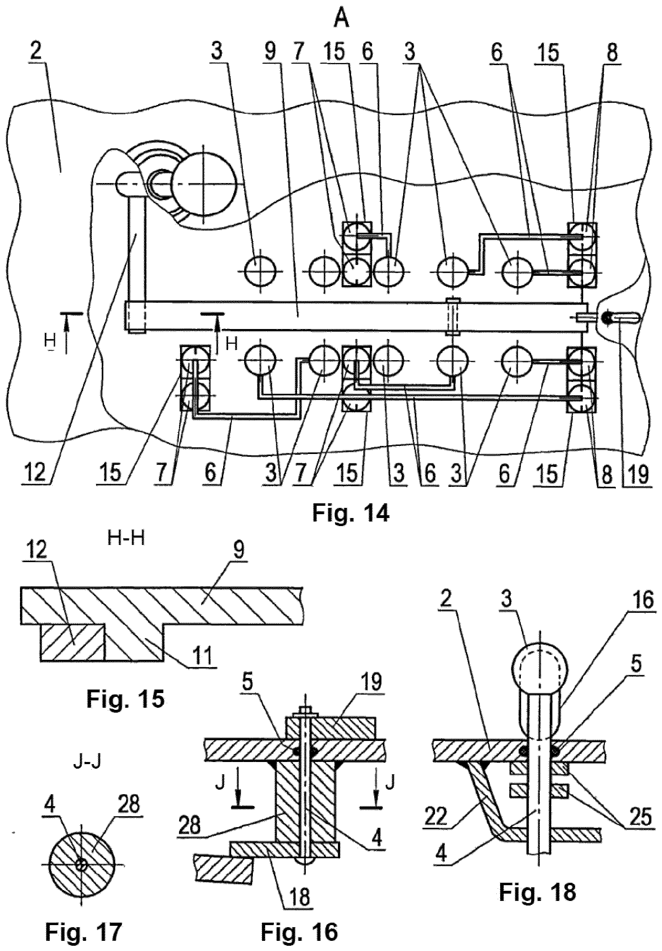

The invention is illustrated by means of the drawings, wherein: Fig. 1 represents a general view of the device assembly with the gearbox lever in the rear position; Fig. 2 represents a plan view of Fig. 1; Fig. 3 represents a longitudinal section of the device; Fig. 4 is a view taken along B-B line of Fig. 3; Fig. 5 is a view taken along C of Fig. 6; Fig. 6 is a detailed view I of Fig. 3; Fig. 7 is a view taken along line D-D of Fig. 3; Fig.8 is a view taken along E of Fig. 3; Fig. 9 - is a view taken along F of Fig. 8; Fig. 10 is a view taken along L of Fig. 11; Fig.11 represents a general view of the device assembly with the gearbox lever in the front position; Fig. 12 - is a view G of Fig. 11; Fig. 13 represents a plan view of Fig. 12; Fig. 14 - is a view taken along A of Fig. 3; Fig.15 is a view taken along the line H - H of Fig. 14; Fig. 16 is a variant of the fixer of Fig. 6; Fig. 17 - is a view taken along the line J-J of Fig. 16; Fig. 18 - represents an enlarged cross sectional view of the rod.

### An embodiment of the invention

The keyless anti-theft device comprises a security part, a gearbox 2 lever 1 locking means and a drive mechanism of the locking means.

Wherein the security part is made in the form of a set of code and false keys 3 with rods 4 mounted into the gearbox by means of seals 5 and connected by means of three-dimensional levers 6 with weights 7 and 8 of the drive mechanism of the locking means which is in the form of a rocker arm 9 vertically pivotable about the axis 10. The locking end of the rocker arm 9 is provided with a limiter 11 for limiting the travel of a gearbox lever adapted for interacting with a stop piece 12 rigidly connected to the gearbox 2 lever 1.

The device is provided with a limiter 13 for limiting the rocker arm 9 locking end descending travel. Three-dimensional levers 6 are connected to the weights 7 and 8 through flexible ties 14. All the weights are freely arranged in open-top baskets 15 rigidly connected to said rocker arm 9 and equipped with tongues 16 preventing the weights 7 and 8 from falling out the baskets 15. The baskets 15 are arranged longitudinally on either side of the rocker arm 9 mounting axis 10, thus, forming at least one horizontal row. The rocker arm 9 locking part has baskets 15 rigidly attached thereto, wherein the tightening weights 7 of the baskets are connected to the false keys, and the other, i.e. the ballast, part of the rocker arm 9 has baskets 15 rigidly attached thereto being able to receive at least three counterweights 8 connected to the code keys. The ratio of the total weights of each rocker arm 9 locking and ballast parts is obtained in order to allow the rocker arm 9 pivoting towards the ballast part when loaded with a set of counterweights 8; and the rocker arm 9 pivoting towards the locking part when loaded with at least one tightening weight 7 when the ballast part baskets 15 are completely loaded or the rocker arm 9 both locking and ballast parts not loaded at all. The travel of each of said code key rods 4 and the travel of associated counterweight 8 is equal to the value B, thus, allowing the latters stopping at the bottom of the rocker arm 9 ballast part basket 15 in the locked position of the gearbox 2 lever 1. The value B is inherent to all the false key tightening weights 7. The distance between the bottom of the baskets 15 of the rocker arm 9 locking part, more remote from the arm rocker axis 10, and the weights being in contact is equal to the sum of the values B + K₂, wherein the value K₂ is less than the travel K₁ of the rocker arm locking means till the gearbox 2 lever 1 coming out of the stop piece 12 interaction, and the value B is not less than the value K₁.

Each of the rods 3 is equipped with a rotation limiter and axial movement limiters limiting the axial up and down movement and with an upper position stop, performed as a hinge pedestal 16, wherein the security part is equipped with a means for balancing the total weight of each of the moveable elements. In the gearbox upper part a vane-type fixer is arranged to fix the rocker arm 9 open position, and said weights, i.e. counterweights 8 and tightening weights 7, are made of magnetically resistant materials.

The locking means is performed in the form of a downward projection 11 adapted to contact the gearbox lever stop piece 12 in the operation position of the device and to fix the gearbox 2 lever 1 in its front position, or it can be performed as a cross slot adapted to freely engage with a projection provided at the end of the gearbox lever stop piece in its rear position.

The open position fixer of the gearbox lever locking means is performed as a pivot lever 17 having a vane 18 arranged on its free end and engaged in the operation position with the rocker arm 9 and having a handle 19 on the other end, and in its middle part said lever 17 has limiters 20 and 21 for limiting its vertical travel. The lever 17 and the rods 4 are passed through a support plate 22. Each rod 4 hinge pedestal 16 has a height providing its fixing in the upper position. Each rod 4 rotation limiter is performed as two plates 23 attached to the gearbox, surrounding from either side a rectangular cross-section insert 24 integral with the rod 4. The means for balancing the total weight of each of the security part moveable elements can be performed as additional weights 25 attached to the rod 4, the weight of which provides equal total weights of the security part movable elements, and simultaneously the additional weights act as said rod 4 axial movement limiters. The rigid ties between the baskets 15 and the rocker arm 9 can be performed, for example, as pins 26, with flexible ties 14 arranged along them.

The means for balancing the total weight of each of the security part moveable elements also can be performed by changing each three-dimensional lever material consumption and by using for each three-dimensional lever 6 different specific weight materials, as well as the total weight balancing for each of the security part moveable elements can be performed by material removal, such as through or blind openings in each three-dimensional lever 6, whose weight exceeds reference one.

The limiter for limiting the rocker arm locking end descending travel can be performed as a pedestal 13 fixed to the gearbox and adapted for interacting with the rocker arm 9 ballast end. The vane 18 pivot lever 17 has a handle 19 fixed, for example, with a slotted stop washer 27, and a pedestal 16 is arranged on the axis 28. The rocker arm 9 may be placed at the gearbox side wall; in this case it is L-shaped (Fig. 10, Fig. 14) with corresponding changes in its shape and the gearbox lever stop piece 12 attachment point.

Comparison of this technical solution to the prior art known from the scientific, technical and patent documentation on the priority date in the main and related headings has not found any device having features identical to all the features contained in the suggested by the Applicant claims of the invention, including its application characteristics. That is, the set of essential features of the solution as claimed has not been previously known and is not identical to any known technical solutions, therefore, it corresponds to such patentability condition as "novelty".

### Industrial applicability

This technical solution is industrially applicable, as the application description and the invention title identifies its purpose it may be industrially manufactured and used as a car anti-theft means being efficient, feasible and reproducible, while its characteristics allow for achieving the required technical effect.

The invention in the form as it is characterized in each of the claims, may be performed using the means and methods described in the prior art, publicly available before the invention priority date. Consequently, the technical solution as claimed meets the patentability condition of "industrial applicability".

The device operates as follows.

For gearbox locking the lever 1 is turned into its extreme front or rear position, setting its direct, increase or reverse gear, and then the rocker arm 9 vane 18 locking is released, it descends and engages the stop piece 12, thus locking the lever 1. In such position the rods 4 are expanded into their upper position and fixed with the pedestals 16.

To unlock the gearbox the code keys are pressed down and the counterweights 8 are released together with the baskets 15 are lowered by the length B. Due to this, the ballast part descends and the rocker arm 9 disengages the stop piece 12 enabling the car to start off. Thus, the rocker arm is locked with the vane 18 and then all the key 3 rods are moved downwards. When a wrong code is entered, the tightening weights 7 of the false keys equally spaced from the code keys also descend by the value B and a malefactor can't distinguish them from the code keys by their travel length.

When all the code keys are pressed down, the rocker arm 9 locking part does not ascend, as the flexible ties of the levers 6 with weights are relaxed and the torque caused by the locking part weight relative to the rocker arm axis exceeds the torque caused by its ballast parts and counterweights total weight.

When an entered code is wrong, the tightening weights 7 of the false keys, more remote to the rocker arm 9 axis 10 then the code keys also descend by the value B and a malefactor can't distinguish them from the code keys by their travel length. In this case, the torque relative to the rocker arm 9 axis 10 caused by the action of the rocker arm locking part weight, when at least one false key is pressed, exceeds the torque caused by the counteraction of the ballast part total weight including the counterweights 8 and, consequently, the rocker arm is impossible to be disengaged with the gearbox lever 1 stop piece 12, since the value K₂ appears to be smaller than the height K₁ of the rocker arm stop piece 11 and the thickness of the lever 1 stop piece 12.

The use of the device allows for increasing the security and expanding the operational capacities due to the reduced weight.

## Claims

1. A keyless anti-theft device comprising a security part, a gearbox (2), a gearbox lever (1), a gearbox lever locking means and a drive mechanism for the locking means, wherein the security part is made in the form of a set of code and false keys (3) with rods (4) mounted into the gearbox (2) by means of seals (5) and connected by means of three-dimensional levers (6) to drive mechanism weights (7), (8) of the locking means having the form of a rocker arm (9) vertically pivotable about an axis (10), wherein a locking end of the rocker arm (9) is provided with a limiter (11) for limiting the travel of a gearbox lever adapted for interacting with a stop piece (12) rigidly connected to the gearbox lever (1), wherein the device is provided with a limiter (13) for limiting the rocker arm (9) locking end descending travel, ***characterized in that*** said three-dimensional levers (6) are connected to the weights (7), (8) through flexible ties (14), wherein all the weights are freely arranged in open-top baskets (15) rigidly connected to said rocker arm (9) and equipped with tongues (16) preventing the weights (7), (8) from falling out of the baskets (15), the baskets (15) being arranged longitudinally on either side of the rocker arm (9) mounting axis (10) in at least one horizontal row, wherein the rocker arm (9) locking part has baskets (15) rigidly attached thereto, wherein the tightening weights (7) of the baskets are connected to the false keys, and the other, i.e. the ballast, part of the rocker arm (9) has baskets (15) rigidly attached thereto being able to receive at least three counterweights (8) connected to the code keys, wherein the ratio of the total weights of each rocker arm (9) locking and ballast parts is obtained in order to allow the rocker arm (9) pivoting towards the ballast part when loaded with a set of counterweights (8); and pivoting towards the locking part when loaded with at least one tightening weight (7) when the ballast part baskets (15) are completely loaded or the rocker arm (9) locking and ballast parts are not loaded at all, wherein the travel of each of said code key rods (4) and the travel of associated counterweight (8) is equal to the value B, thus allowing the latters stopping at the bottom of the basket (15) of the rocker arm (9) ballast part in the locked position of the gearbox lever (1), wherein the value B is inherent to all the false key tightening weights (7), whereby the distance between the bottom of the false key baskets (15), more remote from the arm rocker axis (10), within the rocker arm (9) locking part, and the weights when they are in contact is equal to the sum of B + K₂, wherein the value K₂ is less than the travel K₁ of the rocker arm locking means till the gearbox lever (1) coming out of the stop piece (12) interaction, and the value B is not less than the value K₁, wherein each of the rods (3) is equipped with a rotation limiter and axial movement limiters limiting the axial up and down movement and with an upper position stop performed as a hinge pedestal (16), wherein the security part is equipped with a means for balancing the total weight of all the moveable elements, wherein in the gearbox upper part a vane-type fixer is arranged to fix the rocker arm (9) open position, and said weights, i.e. counterweights (8) and tightening weights (7), are made of magnetically resistant materials, the gearbox lever (1) and rods (4) being passed through a support plate.

2. The keyless anti-theft device of claim 1, **characterized in that** said locking means is performed in the form of a downward projection adapted to contact with the gearbox lever stop piece (12) in the operation position of the device and to fix the gearbox lever (1) in its front position.

3. The keyless anti-theft device of claim 1, **characterized in that** said locking means is performed in the form of a cross slot adapted to freely engage with a projection provided at the end of the gearbox lever stop piece (12) in its rear position.

4. The keyless anti-theft device of claim 1, **characterized in that** said open position fixer of the gearbox lever locking means is performed as a pivot lever (17) having a vane (18) arranged on its free end and engaged in the operation position with the rocker arm (9) and having a handle (19) on the other end, and in its middle part said pivot lever (17) has limiters (20), (21) for limiting its vertical travel.

5. The keyless anti-theft device of claim 4, **characterized in that** said vertical travel limiting means of the pivot lever (17) is performed in the form of two sleeves spaced apart or a sleeve with a height equal to the distance between the gearbox upper part and the support plate (22).

6. The keyless anti-theft device of claim 1, **characterized in that** said rocker arm (9) is L-shaped and shifted to the gearbox side wall.

7. The keyless anti-theft device of claim 1, **characterized in that** each rod hinge pedestal (16) has a height providing its fixing in the upper position.

8. The keyless anti-theft device of claim 1, **characterized in that** each rod rotation limiter is performed as two plates attached to the gearbox (2), surrounding from either side a rectangular cross-section insert integral with the rod.

9. The keyless anti-theft device of claim 1, **characterized in that** the means for balancing the total weight of each of the security part moveable elements is performed as additional weights attached to the rod, the weight of which provides equal total weights of the security part movable elements, and simultaneously the additional weights act as said rod axial movement limiters (11), (13).

10. The keyless anti-theft device of claim 1, **characterized in that** the means for balancing the total weight of each of the security part moveable elements is performed by changing each three-dimensional lever (6) material consumption.

11. The keyless anti-theft device of claim 1, **characterized in that** the means for balancing the total weight of each of the security part moveable elements is performed by using for each three-dimensional lever (6) different specific weight materials.

12. The keyless anti-theft device of claim 1, **characterized in that** the means for balancing the total weight of each of the security part moveable elements is performed by material removal, such as through or blind openings in each three-dimensional lever (6) whose weight exceeds reference one.

13. The keyless anti-theft device of claim 1, **characterized in that** said limiter (13) for limiting the rocker arm (9) locking end descending travel is performed as a pedestal fixed to the gearbox (2) and adapted for interacting with the rocker arm ballast end.

## Patentansprüche

1. Schlüssellose Diebstahlsicherung, umfassend einen Sicherheitsteil, ein Getriebe (2), einen Getriebehebel (1), ein Verriegelungsmittel und einen Antriebsmechanismus für das Verriegelungsmittel, wobei
der Sicherheitsteil als eine Gruppe von Kodetasten und falschen Tasten (3) mit Stangen (4), die im Getriebe (2) mittels Dichtungen (5) befestigt und mittels dreidimensionaler Hebel (6) mit Gewichtselementen (7), (8) des Antriebsmechanismus des Verriegelungsmittels verbunden sind, ausgeführt ist;
das Verriegelungsmittels als ein um eine Achse (10) vertikal schwenkbarer Kipphebel (9) ausgeführt ist, wobei das Verriegelungsende des Kipphebels (9) einen Begrenzer (11) zur Begrenzung der Bewegung des Getriebehebels erhält, der zum Zusammenwirken mit einem mit dem Getriebehebel (1) fest verbundenen Anschlag (12) konfiguriert ist;
die Diebstahlsicherung einen Begrenzer (13) zur Begrenzung der Abwärtsbewegung des Verriegelungsendes des Kipphebels (9) erhält;
***dadurch gekennzeichnet, dass***
die dreidimensionalen Hebel (6) durch flexible Verbindungen (14) mit den Gewichtselementen (7), (8) verbunden sind, wobei die Gewichtselemente jeweils in oben offenen Körben (15) ungehindert angeordnet sind, die mit dem Kipphebel (9) fest verbunden sind und das Fallen der Gewichtselemente (7), (8) aus den Körben (15) verhindernde Lappen (16) erhalten;
die Körbe (15) längs auf beiden Seiten der Befestigungsachse (10) des Kipphebels (9) in mindestens einer horizontalen Reihe angeordnet sind, wobei die Körbe (15), dessen Lastgewichtselemente (7) mit den falschen Tasten verbunden sind, am Verriegelungsteil des Kipphebels (9) starr befestigt sind; und die Körbe (15), die mindestens drei mit den Kodetasten verbundene Gegengewichtselemente (8) aufnehmen können, am anderen Teil, das heißt am Ballastteil, des Kipphebels (9) starr befestigt sind, wobei das Verhältnis zwischen dem Totalgewichte des Verriegelungs- und Balastteils des Kipphebels (9) bekommen ist, damit der Kipphebel (9) in Richtung des Ballastteils geschwenkt sein kann, wenn er durch die Gruppe der Gegengewichtselemente (8) belastet ist, und in Richtung des Verriegelungsteils geschwenkt werden kann, wenn er durch mindestens ein Lastgewichtselement (7) belastet ist und die Körbe (15) des Ballastteils vollständig beladet sind oder der Verriegelungs- und ballastteils des Kipphebels (9) gar nicht belastet sind;
wobei die Bewegung jeder der Stangen (4) der Kodetasten und die Bewegung des mit ihr verbundenen Gegengewichtselements (8) einem Wert B gleich sind, so dass die Letzten sich in der Verriegelungsposition des Getriebehebels (1) gegen den Boden des Korbes (15) des Ballastteils des Kipphebels (9) stützen können, wobei jedes der Lastgewichtselemente (7) der falschen Tasten auch den Wert B hat, und der Abstand zwischen dem Boden der Körbe (15) der falschen Tasten in den Verriegelungsteil des Kipphebels (9), die von der Achse (10) des Kipphebels mehr entfernt sind, und den Gewichtselementen, wenn sie in Kontakt stehen, der Summe von B + K₂ gleich ist, wobei der Wert K₂ kleiner als die Bewegung K₁ des Verriegelungsmittels des Kipphebels ist, bevor der Anschlag (12) des Getriebehebels (1) außer Eingriff kommt, und der Wert B nicht kleiner als der Wert K₁ ist;
wobei jede der Stangen (3) einen Drehungsbegrenzer und axiale Aufwärts- und Abwärtsbewegungen begrenzende Begrenzer, sowie einen Stopper der oberen Position, der als einen Gelenkbock (16) ausgeführt ist, umfasst, wobei der Sicherheitsteil ein Mittel zum Ausgleich des Totalgewichts aller beweglichen Elemente umfasst, wobei ein flügelartiger Fixator zur Fixierung der offenen Position des Kipphebels (9) im oberen Teil des Getriebes angeordnet ist, und die Gewichtselemente, das heißt die Gegengewichtselemente (8) und Lastgewichtselemente (7), aus magnetisch widerstandsfähig Materialien sind, wobei der Getriebehebel (1) und die Stangen (4) durch eine Stützplatte hindurchgeführt sind.

2. Schlüssellose Diebstahlsicherung nach Anspruch 1, **dadurch gekennzeichnet, dass** das Verriegelungsmittel als ein nach unten gerichteter Vorsprung ausgeführt ist, der in der Arbeitsstellung der Diebstahlsicherung zum Kontaktieren mit dem Anschlag (12) des Getriebehebels und zur Fixierung des Getriebehebels (1) in seiner vorderen Position konfiguriert ist.

3. Schlüssellose Diebstahlsicherung nach Anspruch 1, **dadurch gekennzeichnet, dass** das Verriegelungsmittel als ein Kreuzschlitz ausgeführt ist, der zum ungehinderten Eingriff mit einem auf dem Ende des Anschlags (12) des Getriebehebels vorgesehenen Vorsprung in seiner hinteren Position konfiguriert ist.

4. Schlüssellose Diebstahlsicherung nach Anspruch 1, **dadurch gekennzeichnet, dass** der Fixator der offenen Position des Verriegelungsmittels des Getriebehebels als ein Schwenkhebel (17) ausgeführt ist, der einen Flügel (18), der auf seinem freien Ende angeordnet und in der Arbeitsstellung mit dem Kipphebel (9) im Eingriff ist, sowie einen Griff (19) auf dem anderen Ende erhält, und am Mittelteil des Schwenkhebels (17) Begrenzer (20), (21) zur Begrenzung seine vertikale Bewegung vorgesehen sind.

5. Schlüssellose Diebstahlsicherung nach Anspruch 4, **dadurch gekennzeichnet, dass** das Mittel zur Begrenzung der vertikalen Bewegung des Schwenkhebels (17) als zwei voneinander beabstandete Hülsen oder eine Hülse mit der Höhe, die dem Abstand zwischen dem Oberteil des Getriebes und der Stützplatte (22) gleich ist, ausgeführt ist.

6. Schlüssellose Diebstahlsicherung nach Anspruch 1, **dadurch gekennzeichnet, dass** der Kipphebel (9) L-förmig ausgeführt und zur Seitenwand des Getriebes verschoben ist.

7. Schlüssellose Diebstahlsicherung nach Anspruch 1, **dadurch gekennzeichnet, dass** der Gelenkbock (16) jeder Stange solche Höhe hat, die seine Fixierung in der oberen Position ermöglicht.

8. Schlüssellose Diebstahlsicherung nach Anspruch 1, **dadurch gekennzeichnet, dass** der Drehungsbegrenzer jeder Stange als zwei Platten ausgeführt ist, die am Getriebe (2) befestigt sind und einen mit der Stange unlösbar verbundenen Einsatz mit rechteckigem Querschnitt beiderseits umgeben.

9. Schlüssellose Diebstahlsicherung nach Anspruch 1, **dadurch gekennzeichnet, dass** das Mittel zum Ausgleich des Totalgewichts jedes der beweglichen Elemente des Sicherheitsteils als zusätzliche Gewichtselemente ausgeführt ist, die an der Stange befestigt sind und deren Gewicht die Totalgewichte der beweglichen Elemente des Sicherheitsteils gleich macht, wobei die zusätzlich Gewichtselemente gleichzeitig als die Begrenzers (11), (13) der Axialbewegung der Stange dienen.

10. Schlüssellose Diebstahlsicherung nach Anspruch 1, **dadurch gekennzeichnet, dass** das Mittel zum Ausgleich des Totalgewichts jedes der beweglichen Elemente des Sicherheitsteils durch die Änderung des Materialverbrauchs jedes dreidimensionalen Hebels (6) ausgeführt ist.

11. Schlüssellose Diebstahlsicherung nach Anspruch 1, **dadurch gekennzeichnet, dass** das Mittel zum Ausgleich des Totalgewichts jedes der beweglichen Elemente des Sicherheitsteils durch die Verwendung von Materialien mit verschiedenem spezifischem Gewicht für jeden dreidimensionalen Hebel (6) ausgeführt ist.

12. Schlüssellose Diebstahlsicherung nach Anspruch 1, **dadurch gekennzeichnet, dass** das mittel zum Ausgleich des Totalgewichts jedes der beweglichen Elemente des Sicherheitsteils durch Materialentfernung mittels Durch- oder Grundbohrungen in jedem dreidimensionalen Hebel (6) ausgeführt ist, dessen Gewicht größer als das Referenzgewicht ist.

13. Schlüssellose Diebstahlsicherung nach Anspruch 1, **dadurch gekennzeichnet, dass** die Begrenzer (13) zur Begrenzung der Abwärtsbewegung des Verriegelungsendes des Kipphebels (9) als ein Bock ausgeführt ist, der am Getriebe (2) befestigt und zum Zusammenwirken mit dem Ballastende des Kipphebels konfiguriert ist.

## Revendications

1. Dispositif antivol sans clé comprenant une partie de sécurité, une boîte de vitesses (2), un levier (1) de boîte de vitesses, des moyens de verrouillage et un mécanisme d'entraînement pour les moyens de verrouillage, dans lequel dispositif la partie de sécurité est réalisée sous la forme d'un ensemble clés (3) codés et fausses avec des tiges (4) montées dans la boîte de vitesses (2) par des joints (5) de serrage et reliées par des leviers (6) tridimensionnels pour entraîner des poids (7), (8) de mécanisme des moyens de verrouillage sous la forme d'un bras (9) oscillant pouvant pivoter verticalement autour d'un axe (10), cependant une extrémité de verrouillage du bras (9) oscillant est pourvue d'un arrêt (11) pour limiter le déplacement du levier de boîte de vitesses adapté pour interagir avec une butée (12) reliée rigidement au levier (1) de boîte de vitesses, lequel dispositif est pourvu d'un arrêt (13) pour limiter le déplacement descendant de l'extrémité de verrouillage du bras (9) oscillant, **caractérisé en ce que** lesdites leviers (6) tridimensionnels sont reliés aux poids (7), (8) par l'intermédiaire des liaisons (14) flexibles, dans lequel tous les poids sont disposés librement dans des cages (15) ouvertes reliées rigidement au dit bras (9) oscillant et équipées de languettes (16) empêchant les poids (7), (8) de sortir des cages (15), lesdites cages (15) étant disposées longitudinalement de part et d'autre de l'axe (10) de montage du bras (9) oscillant dans au moins une rangée horizontale, dans lequel la partie de verrouillage du bras (9) oscillant comporte des cages (15) fixées rigidement à celle-ci, dans lequel les poids (7) de serrage des cages sont connectés aux clés fausses, et l'autre partie, c'est-à-dire la partie de ballast, du bras (9) oscillant comporte des cages (15) fixées rigidement à celui-ci pouvant recevoir au moins trois contrepoids (8) connectés aux clés (3) codés, en cela la relation des poids totaux de chaque partie de verrouillage et celle de ballast du bras (9) oscillant est obtenue pour permettre au bras (9) oscillant de pivoter vers la partie de ballast lorsqu'il est chargé avec un ensemble de contrepoids (8); et de pivoter vers la partie de verrouillage lorsqu'il est chargés avec au moins un poids (7) de serrage lorsque les cages (15) des parties de ballast sont complètement chargées ou les parties de verrouillage et celles de ballast du bras (9) oscillant ne sont pas chargées du tout, dans lequel le déplacement de chacune desdites tiges (4) de clés codés et le déplacement du contrepoids associé (8) est égal à la valeur B, ce qui permet aux secondes de s'arrêter au fond de la cage (15) de la partie de ballast du bras (9) oscillant dans la position verrouillée du levier de boîte de vitesses (1), où la valeur B est inhérente à tous les poids (7) de serrage des clés fausses, en cela la distance entre le fond des cages des clés (15) fausses, plus éloignées de l'axe (10) du bras oscillant dans la partie de verrouillage du bras (9) oscillant et les poids lorsqu'ils sont en contact est égal à la somme de B +K₂, où la valeur K₂ est inférieure à la distance K₁ des moyens de verrouillage du bras oscillant jusqu'à ce que le levier de boîte de vitesses (1) sort de l'interaction de la butée (12), et la valeur B n'est pas inférieure à la valeur K₁, et en cela chacune des tiges (3) est équipée d'un arrêt de rotation et des arrêts de mouvement axial limitant les mouvements axiaux vers le haut et vers le bas et d'une butée de position supérieure réalisée sous la forme d'un support (16) pivotant, cependant la partie de sécurité est équipée d'un moyen pour équilibrer le poids total de touts les éléments mobiles, en cela dans la partie supérieure de la boîte de vitesses, un fixateur de type aube est agencé pour fixer la position ouverte du bras (9) oscillant, et lesdites poids, c'est-à-dire les contrepoids (8) et les poids (7) de serrage, sont faits de matériaux magnétiquement résistants et le levier (1) de boîte de vitesses et les tiges (4) sont prévus traversant une plaque de support.

2. Dispositif antivol sans clé selon la revendication 1, **caractérisé en ce que** ledit moyen de verrouillage est réalisé sous la forme d'une saillie vers le bas adapté pour contacter avec une butée (12) du levier de boîte de vitesses dans la position de fonctionnement du dispositif et pour fixer le levier (1) de boîte de vitesses dans sa position avant.

3. Dispositif antivol sans clé selon la revendication 1, **caractérisé en ce que** ledit moyen de verrouillage est réalisé sous la forme d'une fente transversale adaptée pour s'engager librement avec une saillie prévue à l'extrémité de la butée (12) du levier de boîte de vitesses dans sa position arrière.

4. Dispositif antivol sans clé selon la revendication 1, **caractérisé en ce que** ledit fixateur de la position ouverte des moyens de verrouillage du levier de boîte de vitesses est réalisé sous la forme d'un levier (17) de pivotement comportant une aube (18) disposée sur son extrémité libre et engagée dans la position de fonctionnement avec le bras (9) oscillant et comportant une poignée (19) à l'autre extrémité, et dans sa partie médiane, ledit levier (17) de pivotement comporte des arrêts (20), (21) pour limiter son déplacement vertical.

5. Dispositif antivol sans clé selon la revendication 4, **caractérisé en ce que** lesdits arrêts pour limiter le déplacement vertical du levier de pivotement (17) sont réalisés sous la forme de deux manchons espacés ou d'un manchon ayant une hauteur égale à la distance entre la partie supérieure de la boîte de vitesses et la plaque (22) de support.

6. Dispositif antivol sans clé selon la revendication 1, **caractérisé en ce que** ledit bras (9) oscillant est en forme de L et il est décalé vers la paroi latérale de la boîte de vitesses.

7. Dispositif antivol sans clé selon la revendication 1, **caractérisé en ce que** chaque support (16) pivotant a une hauteur assurant sa fixation dans la position supérieure.

8. Dispositif antivol sans clé selon la revendication 1, **caractérisé en ce que** chaque arrêt de rotation de la tige est réalisé sous la forme de deux plaques fixées à la boîte (2) de vitesses, entourant de chaque côté un insert de section rectangulaire solidaire de la tige.

9. Dispositif antivol sans clé selon la revendication 1, **caractérisé en ce que** les moyens pour équilibrer le poids total de chacun des éléments mobiles de la partie de sécurité sont réalisés sous la forme de poids supplémentaires attachés à la tige, dont le poids est égal aux poids totaux de la partie de sécurité des éléments mobiles, et simultanément, les poids additionnels agissent comme les arrêts (11), (13) de mouvement axial de la tige.

10. Dispositif antivol sans clé selon la revendication 1, **caractérisé en ce que** les moyens pour équilibrer le poids total de chacun des éléments mobiles de la partie de sécurité sont effectués en changeant consommation de matériau de chaque levier (6) tridimensionnel.

11. Dispositif antivol sans clé selon la revendication 1, **caractérisé en ce que** les moyens pour équilibrer le poids total de chacun des éléments mobiles de la partie de sécurité sont effectués en utilisant différents matériaux de poids spécifiques pour chaque levier (6) tridimensionnel.

12. Dispositif antivol sans clé selon la revendication 1, **caractérisé en ce que** les moyens pour équilibrer le poids total de chacun des éléments mobiles de la partie de sécurité sont effectués par récession de matériau, telle que des trous traversants ou borgnes dans chaque levier (6) tridimensionnel dont le poids excède celui de la référence.

13. Dispositif antivol sans clé selon la revendication 1, **caractérisé en ce que** ledit arrêt (13) pour limiter le déplacement descendant de l'extrémité de verrouillage du bras (9) oscillant est réalisé sous la forme d'un support fixé à la boîte (2) de vitesses et adapté pour interagir avec l'extrémité du bras oscillant.
